(19) Europäisches Patentamt
European Patent Office
Office européen des brevets

(11) **EP 1 927 970 A1**

(12) **EUROPEAN PATENT APPLICATION**

(43) Date of publication:
**04.06.2008 Bulletin 2008/23**

(51) Int Cl.:
***G09G 1/00*** *(2006.01)*

(21) Application number: **06291842.0**

(22) Date of filing: **30.11.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **STMicroelectronics SA**
**92120 Montrouge (FR)**

(72) Inventor: **Matavka, Rudolf**
**38120 Saint-Egreve (FR)**

(74) Representative: **Zapalowicz, Francis**
**Bureau D.A. Casalonga & Josse**
**Bayerstrasse 71/73**
**80335 München (DE)**

(54) **Method for controlling a cathode ray tube display screen by controlling the voltage of a reference electrode and corresponding circuit**

(57)    The invention discloses a control circuit adapted to control a Cathode Ray Tube (CRT) display screen including a CRT reference electrode (G1), comprising control means (CTC) for controlling the voltage of said CRT reference electrode. Said control means comprise first generation means adapted to provide an initial current ($k.I_{REF}$) having an adjustable value, elaboration means (CC, $R_2$) adapted to elaborate said voltage of said CRT reference electrode from said initial current and adjustment means (cmi) adapted to adjust the value of said initial current.

FIG.2

**Description**

The invention relates in general to color cathode ray tube display screens currently called CRT by the man skilled in the art, and more particularly to computer monitor CRT's.

The color CRT houses in its neck three cathodes (one for each channel: red, green and blue) made of material emitting electrons while heated and exposed to an electric field.

The amount of the electric field and so the amount of emitted electrons is determined by a positively charged common electrode generally called G2 electrode (or "screen" electrode), a common regulation electrode generally called G1 electrode (or reference electrode) and the voltage applied on each of the three cathodes. The voltages applied on the cathodes are generated by a cathode driver.

The electrons emitted by the cathodes are accelerated towards the screen due to the G2 positive voltage then by an extremely high tension on the anode formed of a shadow mask situated close to the screen.

The screen is plated with color phosphor dots or lines generating light when exited with electrons. The three electron rays are focused with a focusing element to create fine beams. The three electron beams are then dynamically deflected in a magnetic field created by external deflection coils. An appropriate combination of deflection currents flowing through the deflection coils, synchronized with a modulation of the three electron beam currents, creates viewable images on the screen.

The beam current determines the intensity of light generated by phosphors on the screen. For a given G2 electrode and anode voltage, the beam current depends, following a near-exponential law, on the voltage on its corresponding cathode referenced to the G1 electrode.

At certain voltage level, the beam current and screen spot luminosity falls at a level hardly perceptible to human eye. The corresponding voltage is called "cut-off point". The simultaneous cut-off points on the three cathodes result in black image.

Lowering the voltage on the cathode, the beam current will grow, increasing the luminosity of that channel (red, green or blue) on the screen. For having a sufficient white luminosity on a computer monitor screen, the voltage levels on the cathodes must be set about 40V below the corresponding cut-off points, with some spread between the cathodes due to cathode gain and phosphor sensitivity differences. A specific combination of the three voltages results in white image color.

For an ideally set computer CRT display, the lowest levels of input red, green and blue signals shall correspond to cut-off points of the corresponding cathodes forming the black image. Then the highest levels of the three input signals at the same time shall correspond to white image.

In practice, the three cathodes of the same CRT may have different cut-off points. The difference between the values of the cut-off points of any two cathodes is specified for every CRT model and is in general at maximum about 15%.

Moreover, the cut-off levels may be dispersed from one CRT to another within the same model and from one model to another.

When all cathodes are set to their respective cut-off points, the corresponding beam current is not an absolute zero corresponding to said black image. This results in a visible light spot on the screen when the beam scanning is stopped.

In order to ensure reproducibility in the industrial line, the application must provide means to compensate for the dispersions between CRT's and to adjust cut-off points on the three cathodes of the same CRT, so that black video signal corresponds to black image and grey video signal to grey image.

Those means consist in separately adjusting the gain of each red, green and blue channel and thus swing of each red, green and blue cathode voltage, which is commonly known as white point adjustment, then in separately adjusting the pedestal voltage on each red, green and blue cathode called cut-off adjustment. Alternatively, for only the compensation for dispersions between CRT's, an adjustment of G1 voltage may be used and this adjustment is called sub-brightness.

For the end-user, the application must furthermore provide contrast and brightness adjustments. The contrast control is done with a variable gain stage commonly adjusted for all three channels. The brightness control is done with a variable voltage pedestal commonly adjusted on all three cathodes or alternatively, on the G1 electrode.

For realizing a CRT's video board with such a structure, several constraints must be taken in account.

First, at display power down, the supply voltages decrease, following a sequence that is particular to every different application. In some cases, this may result in very strong luminous spot displayed on the screen for a while, annoying to the viewer and dangerous for the phosphor layer. Consequently, the application must provide means to avoid this problem. The solutions are various, sometimes complicated. The function is usually called "Spot killer" by the man skilled in the art.

The own power consumption of the system is the sum of static and dynamic power losses. With video frequencies of computer video signals, the dynamic losses in the cathode driver are prevailing.

Furthermore, the adjustments like contrast, brightness, cut-off and gain are done in the video processor block, usually built in one small signal integrated circuit containing the three channels. It interfaces with the cathode driver, a large signal circuit built of one or more integrated circuits and/or discrete semiconductor components, which drives the CRT cathodes. It may contain other components depending on the application type.

There are two different application types commonly called "DC-coupling" application and "AC-coupling" application to realize the video board.

In the "DC-coupling" type of application, the cathode driver outputs are coupled with CRT cathodes directly, without coupling capacitors. It delivers cathode signals comprising their alternative and direct components. The cathode driver is therefore completely realized with an inverting video voltage amplifier. All adjustments like gain, cut-off, contrast and brightness are done directly by positioning the outputs of the cathode driver.

Alternatively, the brightness and sub-brightness can be done by adjusting the G1 voltage. However, existing solutions to adjust G1 voltage are very sensitive to temperature variations.

Advantageously, the "DC-coupling" application has a lower number of components and so a low cost and a small size and weight of CRT video board that is fixed on the neck of the CRT. However, for the "DC-coupling" application, the cathode driver supply voltage is higher than the supply voltage for the other applications, given that the cathode driver must provide enough range for both alternative and direct signal components. Typical value is around 100V. This high supply voltage value implies higher total own power consumption, as it is proportional to the supply voltage value.

In the "AC-coupling" application, the cathode driver consists of an inverting video amplifier and a clamp circuit. The video amplifier outputs are coupled with the CRT's cathodes via coupling capacitors.

The voltage pedestals on the cathodes are created by clamp circuits with diodes connected between each cathode and an adjustable voltage source provided for each channel. The cathode signals are clamped with their highest spikes to the voltage source levels plus diode dropout. The video amplifier only processes the alternative signal component. The direct component is determined by the clamp circuit. The adjustable voltage sources are realized by means of three amplifiers receiving small DC adjustable voltages output from video processor and generated in general by digital-to-analog converters. Supplementary capacitors which are connected between the output of the diodes and the ground reference are needed to absorb spikes. Supplementary resistors which are connected between the supply line and each channel, provide biasing current.

Advantageously the "AC-coupling" application has a lower video amplifier supply voltage (a typical value is around 80V) compare to other applications, and thus lower total power losses and smaller heat sink. Moreover the video amplifier is less sensitive to the temperature drifts.

However, the "AC-coupling" application needs a high number of components to build the cathode clamps and capacitive coupling of video paths, therefore higher cost and bigger size of video board.

Besides, above the principle differences between the "DC-coupling" and "AC-coupling" applications, there may be differences in characteristics of video amplifiers.

Two known types of video amplifiers currently available on the market differ in their supply voltage ripple rejection ratios called SVRR, and in their power consumption behavior.

Type I uses operational amplifier architecture and an internal reference voltage. Its own static power consumption does not depend on the output level and it provides a very high SVRR. Its internal schematic is more complex. There must be at least a 15V gap between the supply voltage and the highest output level in order to ensure linear processing and short response times.

Type II uses a simpler internal architecture with no internal reference. Its own static power consumption depends on output level - the lower it is the higher the static consumption. Its SVRR is null - the outputs follow directly all variations of the supply voltage. The output signal levels can be approached closer to the supply voltage without noticeable deterioration of linearity or response time.

The Type I provides the advantage of easy and cheap supply voltage filtering. It also permits supply voltage slow variations or temperature drift to happen without any effect on the pictures. The Type II requires a perfect stability of the supply voltage in time and with temperature which imposes more constraints on the practical solution. On the other hand, its overall total own power consumption is found lower than that of the Type I.

One of the aims of the invention is to propose a CRT driving circuitry which gathers the advantages of AC and DC coupling principles and advantages of the both types (type I and type II) of video amplifiers, that is to say a low supply voltage and own power consumption, a good immunity to temperature drift, a low component count, and a good rejection of supply voltage variations influencing the image.

Another aim of the invention is to gives the possibility to decrease the supply voltage to even lower levels than in "AC-coupling" applications, down to around 65V and hence to further decrease the cathode driver own power consumption.

Another aim of the invention is to propose a simple, cheap and efficient way of building the spot killer function.

It is proposed according to an aspect of the invention, a method for driving a CRT (Cathode Ray Tube) by controlling the voltage on its reference electrode (G1 electrode).

According to a general feature of this aspect of the invention, controlling said voltage of said CRT reference electrode comprises providing an initial current having an adjustable value, elaborating said voltage of said CRT reference electrode from said initial current and adjusting the value of said initial current.

In other words, the method proposes to control the voltage of the reference electrode of the CRT display screen, via a current (and not by directly adjusting the voltage of the CRT reference electrode), whose value is adjustable.

By adjusting the level of the G1 electrode, it is possible to remove the adjustments of brightness and sub-brightness from cathodes and consequently reduce the cathode driver supply voltage by about an amount corresponding to the span of these adjustments. On the contrary to the existing solutions, the G1 control voltage is generated from a current in a way that, in conjunction with Type II video amplifier, the whole system is not sensitive to the variations of supply voltage.

The elaborating said voltage of said CRT reference electrode may comprise providing a control current from said initial current, and elaborating said voltage of said CRT reference electrode from said control current.

By elaborating a control current distinct from the initial current, it is possible to use a lower supply voltage for a part of the method, as described later.

Furthermore, the initial current may be elaborated from a reference current could be elaborated from a reference voltage. The reference voltage may be the cathode driver supply voltage, so that the reference current follows the variations of the cathode driver supply voltage.

Providing initial current may comprise multiplying the reference current by an adjustable gain. Providing a control current may also comprise copying the initial current, and elaborating said voltage of said CRT reference electrode may comprise converting the control current in said voltage of said CRT reference electrode.

The display screen may be blanked (blackened) by cancelling the initial current. It is a particularly simple, and efficient way to realize the "Spot killer" function.

As the voltage of the reference electrode follows the cathode driver supply voltage variations, using the Type II video amplifier will ensure that the picture will not depend on the variations of the cathode driver supply voltage.

A video amplifier implementing a method according to the invention, can operate with a reduced supply voltage, which results in further power savings.

The CRT comprises several cathodes. Said method may further comprise for each cathode
receiving an input signal associated to said cathode,
amplifying said input signal,
elaborating an output signal from the amplified input signal, said output signal comprising an alternative component and a direct component and following the cathode driver supply voltage variations,
driving said cathode of the tube with said output signal.

By having reduced the supply voltage thanks to moving brightness and sub-brightness adjustments from the cathodes to the G1 electrode and thanks to using Type II amplifier, by using a "DC-coupling" type of application and by using a method making the picture independent of variations of cathode driver supply voltage, it is possible to put together the advantages of current solutions using either of "DC-coupling" and "AC-coupling" type of application and eliminate or reduce their respective drawbacks.

According to another aspect of the invention, it is proposed a control circuit adapted for driving a CRT by providing control means for adjusting the voltage on its reference electrode (G1 electrode).

According to a general feature of this other aspect of the invention, said control means comprise first generation means adapted to provide an initial current having an adjustable value, elaboration means adapted to elaborate said voltage of said CRT reference electrode from said initial current and adjustment means adapted to adjust the value of said initial current.

Said elaboration means may comprise first auxiliary elaboration means adapted to elaborate a control current from said initial current, and second auxiliary elaboration means adapted to elaborate said voltage of said CRT reference electrode from said control current.

Said first generation means may comprise an input adapted to receive a reference current, and third auxiliary elaboration means adapted to elaborate said initial current from said reference current.

Said control means may further comprise second generation means adapted to generate a reference voltage, and first conversion means, for instance a resistor, connected at the output of the second generation means, adapted to convert said reference voltage into said reference current.

If initial current is generated from a reference current, said first generation means may comprise a current multiplier, having an adjustable gain, an input adapted to receive said reference current and an output to provide said initial current corresponding to the multiplied reference current, and
said first auxiliary elaboration means may comprise copy means having an input adapted to receive the initial current, and an output to deliver the control current, and
said second auxiliary elaboration means may comprise second conversion means, for instance a resistor, adapted to convert the control current in said voltage of the CRT reference electrode.

The use of copy means allows to supply the means generating said initial current with a small positive voltage like for example 5V, even though the G1 electrode voltage is deeply negative, possibly ranging from -10 to as much as -140V or even lower.

Said copy means may comprise a PNP bipolar transistor with
its emitter supplied with said initial current,
its collector connected to the second conversion means,
its base connected to the ground.

Said copy means may comprise a PMOS transistor with
its source supplied with said initial current,
its drain connected to the second conversion means,
its gate electrode connected to the ground.

According to another embodiment of the invention said copy means may comprise a first and a second PMOS transistors, forming a current mirror; the first transistor with
its source supplied with said initial current,
its drain connected to the second conversion means,
its gate connected to second transistor,
and the second transistor with
its source connected to the ground,
its drain connected to the negative voltage supply via a resistor,
its gate connected to its drain and to the gate of the first transistor.

The current inhibitor means may comprise a switch for inhibiting the initial current and thus blanking the screen, said current inhibitor means being selectively commanded by screen blanking commands.

Screen blanking commands comprise for example a mute signal delivered by a microcontroller, a spot killer signal delivered by a display power-off detector and a vertical blanking pulse signal.

The current inhibitor is activated if any of said screen blanking commands is/are active. In order to achieve this, an appropriate logic function may need to be provided, like for example a triple input logic OR gate.

According to one embodiment, the supply means may deliver cathode driver supply voltage, whereas the reference voltage for generation of reference current is the said cathode driver supply voltage.

In this case, the control circuit may further comprise several cathodes and for each cathode, a cathode driver elaborating an output signal, comprising an alternative component and a direct component (like a "DC-coupling" application), for controlling said cathode, said cathode driver being connected between the cathode driver supply means and the ground, and comprising an input to receive an input signal associated to said cathode, a given gain to amplify said input signal, an output to deliver said output signal, elaborated from said amplified input signal and following said cathode driver supply voltage variations (due to the use of a Type II amplifier).

If first and second conversion means comprise a resistor each, whereof their resistance ratio is equal or close to the gain of the current multiplier then the variations of the reference electrode voltage are equal or close, respectively, to variations of the cathode driver supply voltage. In practice, it is easy to establish such a ratio of said resistances.

Other advantage and features of the invention will appear on examining the detailed description of embodiments, this being in no way limiting, and of the appended drawings in which:

- figure 1 shows an example of a CRT monitor display,
- figure 2 shows the basic principle of CRT driving circuit according to the invention,
- figure 3 shows an other example of a video board for a monitor according to the invention, adapted for using a small signal integrated circuit embedding the current multiplier, the current inhibitions means and the switch,
- figures 4a, 4b and 4c show different examples for realizing copying means according to the invention.

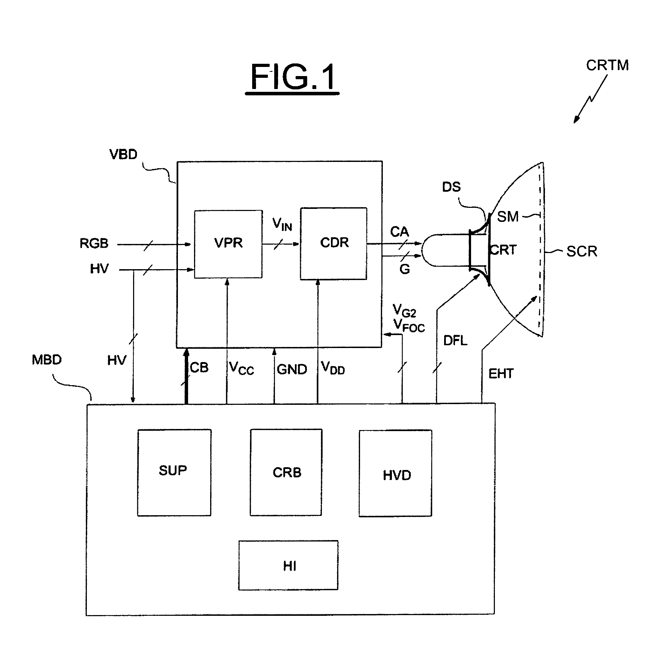

The figure 1 represents schematically an example of electronic boards in a CRT monitor display CRTM for a computer.

The cathode ray tube CRT front plane forms the screen SCR.

The application uses two boards for the control circuit of the CRT, as shown in figure 1. A main board MBD provides a supply means SUP, a control block CRB (for instance a microcontroller), human interface means HI (for example the keyboard on the monitor display face), horizontal and vertical deflection means HVD (including an extra-high tension transformer) and some other circuitry (not shown for simplification purposes).

The horizontal and vertical deflection means HVD drive deflection currents DFL in coils of deflection system DS of the CRT, and extra-high tension EHT for the CRT anode formed of a shadow mask SM.

A video board VBD receives input video signals RGB and synchronization signals HV from an external signal source like a personal computer. The HV signals are also provided to the main board MBD. The video board VBD drives the three CRT cathodes CA and control electrodes G comprising the G1, G2 and focusing elements mentioned above (not represented).

The video board VBD receives from the main board MBD supply voltages $V_{CC}$ and $V_{DD}$ (from the supply voltage block SUP), and a ground reference GND.

The main board MBD also supplies control voltages $V_{G2}$ and $V_{FOC}$ (from the deflection means HVD) for the positively charged common electrode G2 and for the focusing electrode, respectively.

The G1 electrode is set to a negative voltage of around -20V, with deep negative pulses reaching levels like -120V during the return of electron beam from the bottom to the top of the screen. This is to prevent undesirable visible lines from appearing in the dark images. The concrete values may largely vary from one application to another. The control of the voltage on G1 electrode $V_{G1}$ will be explained more in detail below.

The control block CRB is connected to video board VBD via a control bus CB.

The video board VBD comprises two functional blocks called video processor VPR and cathode driver CDR, respectively supplied with the supply voltages $V_{CC}$ and $V_{DD}$.

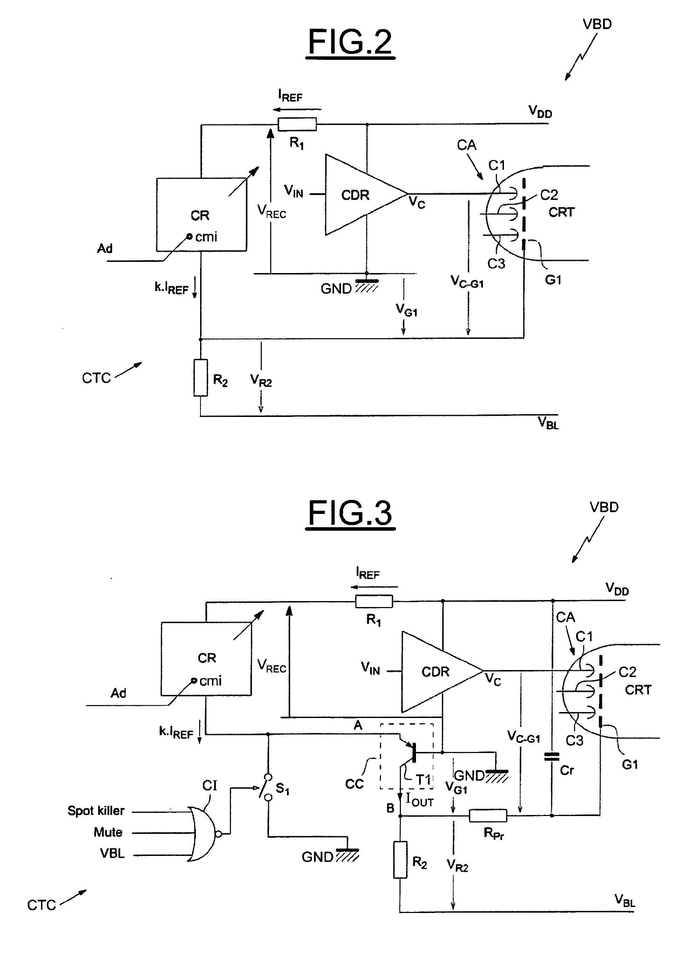

The figure 2 represents the basic principle of said control current generation. The video board VBD according to the invention comprises a cathode driver CDR and control means CTC.

The cathodes CA of the CRT comprise three electrodes C1, C2 and C3 (one for each color: red, green and blue).

Each of cathodes C1, C2, C3 of the CRT is driven with the cathode driver CDR. The input voltage of the cathode driver CDR is $V_{IN}$; its output voltage is $V_c$.

The cathode driver CDR is supplied from supply voltage $V_{DD}$. The reference electrode G1 receives the voltage $V_{G1}$. The elaboration of $V_{G1}$ is detailed below.

The cathode driver CDR is directly coupled to the cathode and its output voltage comprises both direct and alternative components ("DC-coupling" application).

The cathode driver CDR is a voltage amplifier of said type II, with has a low temperature drift. Its output voltage $V_c$ follows variations of $V_{DD}$.

In first instance, its characteristic can be expressed as:

$$V_C = V_{DD} - Ga.V_{IN},$$

where Ga is the gain of the amplifier.

Variations on $V_{DD}$ are therefore directly transposed to $V_c$:

$$\Delta V_C = \Delta V_{DD} \qquad\qquad (1)$$

The positive supply voltage $V_{DD}$ is converted in a reference current $I_{REF}$ by using resistor $R_1$ (first conversion means).

The reference current $I_{REF}$ is delivered to a current receptor CR (first generation means).

The current receptor CR is a current multiplier with an adjustable gain, via adjustment means cmi. The current receptor CR provides the current $I_{REF}$ multiplied by a factor k that can be adjusted. k is a gain depending on the adjustments of the brightness, the sub-brightness, and the like.

The gain k, can be adjusted by a signal Ad, delivered to the adjustment means cmi by the micro controller CRB. The signal Ad is representative of the brightness desired by the end-user and sub-brightness is set in maker's factory.

Moreover, the current receptor CR provides a fixed voltage $V_{REC}$ at its receiving point. This voltage $V_{REC}$, is constant, independent of the input current $I_{REF}$ and has a low temperature drift. Such current receptor can be easily made inside analog integrated circuits. The man skilled in the art will know how choosing the appropriate current receptor according to the voltage used in the video board.

Thus, the reference current $I_{REF}$ can be expressed as:

$$I_{REF} = (V_{DD} - V_{REC}) / R_1.$$

As a consequence, in case of fluctuations of the supply voltage, the reference current $I_{REF}$ varies accordingly.

As $V_{REC}$ is low compared to $V_{DD}$ and constant, the $I_{REF}$ can be expressed in first instance as:

$$I_{REF} = V_{DD} / R_1.$$

The resulting current $k.I_{REF}$ is fed to a resistor $R_2$ (elaboration means) which is connected to a deep negative voltage $V_{BL}$ referenced to ground GND, and delivered by supply means.

The voltage created over resistor $R_2$ can be expressed as:

$$V_{R2} = R_2 . k . I_{REF}$$

or as:

$$V_{R2} = (R_2/R_1) . k . V_{DD} \qquad (2)$$

The voltage $V_{G1}$ can be expressed as:

$$V_{G1} = V_{BL} + (R_2/R_1) . k . V_{DD} \qquad (3)$$

The variation of $V_{DD}$ will cause a variation to $V_{R2}$ as shown here:

$$\Delta V_{R2} = (R_2/R_1). k . \Delta V_{DD},$$

and for a constant $V_{BL}$, the variation of the G1 electrode voltage shall also be:

$$\Delta V_{G1} = (R_2/R_1). k . \Delta V_{DD} \qquad (4)$$

The formula (4) implies that variations of $V_{G1}$ will exactly follow variations of $V_{DD}$ when:

$$R_2/R_1. k = 1,$$

Or when, according to formula (2):

$$V_{R2} = V_{DD}.$$

In case where variations of $V_{G1}$ are identical to variations of $V_c$, the cathode and the G1 electrode operate in common mode versus variations of $V_{DD}$. The beam current proportional to $V_{C-G1}$, is then perfectly immune to $V_{DD}$ ripple or any $V_{DD}$ variations in general, whether slow or fast.

For example, for $V_{DD}$ at 80V, $V_{G1}$ at -30V and $V_{BL}$ at -110V, the $V_{R2}$ will be 80V which is the value of $V_{DD}$. In practice, with these values of $V_{DD}$ and $V_{BL}$, the $V_{G1}$ shall be centered at -30V and the factor k used to adjust brightness and sub-brightness, shall make it vary around this voltage, in order to maximize the effect of natural reduction of $V_{DD}$ variation influence to the image.

At shut-down of $V_{DD}$, the $V_{G1}$ will naturally follow its decrease as the $I_{REF}$ decreases, thus preventing the cathode current from rising. This can be seen as a natural spot killer function.

The Figure 3 shows another embodiment of the solution in case the chosen current receptor CR with adjustable gain k is supplied by the low supply voltage $V_{CC}$ referenced to ground GND, and the cathode driver CDR is supplied with the supply voltage $V_{DD}$.

If the current receptor CR is advantageously built in a small signal integrated circuit supplied from the low supply voltage $V_{CC}$ referenced to ground GND, the G1 electrode, whose voltage is deeply negative, cannot directly be driven from the output of such current receptor.

Consequently, a current copy element CC (first auxiliary elaboration means), separates the output of the current receptor CR, point A, from the G1 electrode, point B, while copying the current from point A to point B. The current copy element CC provides a control current $I_{OUT}$ whose value is equal to $k.I_{REF}$.

The point B is connected to the G1 electrode via a resistor $R_{Pr}$ which is an element protecting the active elements like video processor, against the cathode ray tube CRT discharges.

In this example, the current receptor CR is advantageously realized with a bipolar transistor T1 connected between point A and point B. The base of the transistor T1 is connected to the ground of the video processor VPR.

The collector of the transistor $T_1$ provides the control current $I_{OUT}$ to the resistor $R_2$ (second auxiliary elaboration means) connected here between point B and the negative voltage supply means supplying $V_{BL}$.

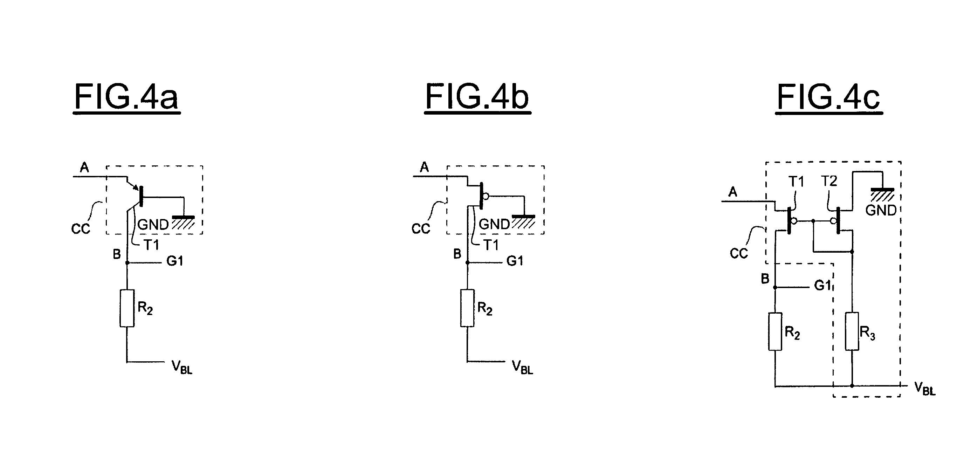

Depending on the practical solution used for the current copy element CC as shown in Figure 4a, 4b and 4c, the voltage in point A can be kept more or less stable but in all cases low and positive, within the voltages $V_{CC}$ and GND.

The preferred solution is a PNP bipolar transistor (figure 4a) for the transistor $T_1$, even though a part of the current is diverted to its base.

As the base current is proportional to the current to be copied, it is compensated for by adjustments Ad of the current receptor gain k.

As represented in figure 4b, the transistor $T_1$ could be a MOS transistor. This kind of transistor has a medium cost, no current loss but the potential at the point A is not very stable.

On figure 4c, the current copy element CC comprises a current mirror formed by two MOS transistors $T_1$ and $T_2$.

Both gates of the transistors are connected together.

The transistor $T_1$ is connected between the point A and the point B.

One electrode of the transistor $T_2$ is connected to the ground GND, and its other electrode receives the negative supply voltage $V_{BL}$ via a resistor $R_3$.

The gate of the transistor $T_2$ is also connected to the resistor $R_3$.

As illustrated on the figure 3, a small value capacitor Cr, can be connected between the power supply means supplying $V_{DD}$ and the G1 electrode. It can further improve the immunity to fast $V_{DD}$ variations.

Moreover, a switch S may be connected between the point A and the ground GND or alternatively in the path of said initial current, in order to totally nullify the current flowing to resistor $R_2$, in which case the $V_{G1}$ voltage gets equal to $V_{BL}$.

This is required during the retrace of the electron beam from bottom to top of the screen, timed with VBL signal. With $V_{G1}$ pulled down to $V_{BL}$, the screen becomes blank (black).

To control the activation of the switch S1, the video processor VPR comprises a current inhibitor CI, comprising here a logic gate "NOR".

The current inhibitor CI receives various signals, some of them being commands from the microcontroller CRB, others being directly received, or elaborated by the video processor from other signals. When one of these signals is active, the CI commands the blanking of the whole screen by nullifying said initial current. Otherwise, the current inhibitor CI has no impact on said initial current.

One of the signals is the "Spot Killer" signal. This one insures that there is no luminous spot on the screen during the power shutdown, this luminous spot capable of deteriorating or damaging green phosphor. An early detection of such an event should be provided in the system.

Another one could be the "Mute signal", which may generated when the micro controller runs video standard change procedure or when a faulty operation of beam scanning is detected, which, without screen blanking, would result in a very luminous horizontal or vertical line across the screen, able to damage the phosphor layer in a short time.

The last signal $V_{BL}$ is the vertical blanking signal, which is emitted each time that the electron beam reaches the end of the screen and goes back to the beginning of the screen, in vertical direction.

The gate CI gathers the screen blanking activation events and if one or more of them are active, it diverts the control current to ground via the switch S1 (cancel means) or interrupts it, thus nullifying the current flowing through the resistor R2.

It will be understood that the invention is not limited to the embodiments disclosed, but is capable of numerous rearrangements, modifications without and substitutions without departing from the spirit of the invention as set forth and defined by the following claims.

For example, according to a variation, if it is not necessary that the voltage $V_{G1}$ follows the ripple of the supply voltage $V_{DD}$, the reference current $I_{REF}$ could be elaborated from another than $V_{DD}$ voltage.

**EP 1 927 970 A1**

**Claims**

1. Method for controlling a Cathode Ray Tube display screen including a CRT reference electrode (G1), comprising controlling the voltage of said CRT reference electrode, **characterized by** the fact that controlling said voltage of said CRT reference electrode comprises providing an initial current ($k.I_{REF}$) having an adjustable value, elaborating said voltage of said CRT reference electrode from said initial current and adjusting the value of said initial current.

2. Method according to claim 1, wherein elaborating said voltage of said CRT reference electrode comprises providing a control current ($I_{OUT}$) from said initial current, and elaborating said voltage of said CRT reference electrode from said control current.

3. Method according to claim 1 or 2, wherein the initial current is elaborated from a reference current ($I_{REF}$).

4. Method according to claim 3, wherein the reference current is elaborated from a reference voltage.

5. Method according to claims 3 or 4, wherein providing initial current comprises multiplying the reference current by an adjustable gain, wherein providing a control current comprises copying the initial current, and wherein elaborating said voltage of said CRT reference electrode comprises converting the control current in said voltage of said CRT reference electrode.

6. Method according to anyone of the preceding claims, wherein the display screen is blanked by cancelling the initial current.

7. Method according to claim 4 and to claims 5 or 6, wherein the reference voltage is the supply voltage ($V_{DD}$) of the cathode driver.

8. Method according to claim 7, for a CRT display screen further comprising several cathodes (C1, C2, C3), said method further comprising for each cathode
receiving an input signal associated to said cathode,
amplifying said input signal,
elaborating an output signal from the amplified input signal and the supply voltage, said output signal comprising an alternative component and a direct component,
controlling said cathode of the tube with said output signal.

9. Control circuit adapted to control a CRT display screen including a CRT reference electrode (G1), comprising control means (CTC) for controlling the voltage of said CRT reference electrode, **characterized by** the fact that said control means comprise first generation means adapted to provide an initial current ($k.I_{REF}$) having an adjustable value, elaboration means (CC, $R_2$) adapted to elaborate said voltage of said CRT reference electrode from said initial current and adjustment means (cmi) adapted to adjust the value of said initial current.

10. Control circuit according to claim 9, wherein said elaboration means comprise first auxiliary elaboration means (CC) adapted to elaborate a control current ($I_{OUT}$) from said initial current, and second auxiliary elaboration means ($R_2$) adapted to elaborate said voltage of said CRT reference electrode from said control current.

11. Control circuit according to claim 9 or 10, wherein said first generation means comprises an input adapted to receive a reference current, and third auxiliary elaboration means (CR) adapted to elaborate said initial current from said reference current.

12. Control circuit according to claim 11, wherein said control means further comprise second generation means adapted to generate a reference voltage, and first conversion means, for instance a resistor ($R_1$), connected at the output of the second generation means, adapted to convert said reference voltage into said reference current.

13. Control circuit according to claim 11 and anyone of claims 9 to 12, wherein said first generation means comprise a current multiplier (CR), having an adjustable gain (k), an input adapted to receive said reference current and an output to provide said initial current corresponding to the multiplied reference current, and
wherein said first auxiliary elaboration means comprise copy means (CC) having an input adapted to receive the initial current, and an output to deliver the control current, and
wherein said second auxiliary elaboration means comprise second conversion means, for instance a resistor ($R_2$),

adapted to convert the control current in said voltage of the CRT reference electrode.

14. Control circuit according to claim 13, wherein said copy means comprise a bipolar transistor including
    A first electrode connected to the current multiplier,
    A second electrode connected to the second conversion means,
    A command electrode connected to the ground.

15. Control circuit according to claim 13, wherein said copy means comprise a MOS transistor including
    A first electrode connected to the current multiplier,
    A second electrode connected to the second conversion means,
    A command electrode connected to the ground.

16. Control circuit according to claim 13, wherein said copy means comprise a first and a second MOS transistors, forming a current mirror, wherein the first transistor includes
    a first electrode connected to the current multiplier,
    a second electrode connected to the second conversion means,
    a command electrode connected to second MOS transistor,
    and wherein the second transistor includes
    a first electrode connected to the ground,
    a second electrode connected to a deep negative voltage ($V_{BL}$) through a resistor,
    a command electrode connected to its second electrode and to the command electrode of the first MOS transistor.

17. Control circuit according to anyone of claims 13 to 16, further comprising a microcontroller (CRB) and current inhibition means (CI) and in particular a switch, for cancelling the initial current, connected between the output of the current multiplier and the ground, or in the path of the current multiplier current, said current inhibition means being selectively commanded by screen blanking signals.

18. Control circuit according to claim 17, wherein screen blanking signals comprise a mute signal and/or a spot killer signal and/or a vertical blanking signal.

19. Control circuit according to claim 17 to 18, further comprising a logic gate (CI), including an input adapted to receive the sreen blanking signals, an output adapted to deliver a signal to command the cancel means according to the state of the screen blanking signals.

20. Control circuit according to claim 12 and anyone of claims 13 to 19, further comprising supply means (SUP) delivering a supply voltage ($V_{DD}$), and wherein the reference voltage is the supply voltage.

21. Control circuit according to claim 20, further comprising several cathodes and a cathode driver (CDR) elaborating output signals comprising an alternative component and a direct component, for controlling said cathodes, said cathode driver being connected between the supply means and the ground, and comprising inputs to receive input signals associated to each of said cathodes, a given gain to amplify said input signals, outputs to deliver said output signals, elaborated from said amplified input signals and said supply voltage.

22. Control circuit according to claims 12, 13 and anyone of claims 14 to 21, wherein first and second conversion means comprising a resistor each, and wherein the ratio between each resistance of both resistors is equal to the adjustable gain of the current multiplier.

23. Display, in particular monitor display, comprising a circuit according to claims 9 to 22.

# FIG.1

# FIG.2

# FIG.3

FIG.4a

FIG.4b

FIG.4c

**European Patent Office**

## EUROPEAN SEARCH REPORT

Application Number

EP 06 29 1842

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 803 464 A (HOLMES RICHARD E [US] ET AL) 7 February 1989 (1989-02-07) | 1-5, 9-14,16, 23 | INV. G09G1/00 |
| Y | * abstract * <br> * column 4, line 48 - column 5, line 30; figure 1 * <br> * column 12, line 3 - line 54; figure 8 * <br> * column 13, line 7 - line 60; figure 10 * | 17-19 | |
| X | US 5 714 842 A (KRAUSE PETER [SG] ET AL) 3 February 1998 (1998-02-03) | 1-3,6, 9-11,13, 23 | |
| Y | * abstract * | 17-19 | |
| A | * column 1, line 32 - line 60 * <br> * column 2, line 31 - line 63 * <br> * column 3, line 14 - column 4, line 58; figure 1 * | 7,8 | |
| X | US 4 651 064 A (PARKER STEPHEN J [US] ET AL) 17 March 1987 (1987-03-17) <br> * abstract * <br> * column 1, line 9 - line 23 * <br> * column 3, line 6 - column 4, line 18; figures 3,4 * | 1,2,9, 10,23 | TECHNICAL FIELDS SEARCHED (IPC) <br><br> G09G <br> H04N |
| X | DE 32 35 853 A1 (SIEMENS AG [DE]) 29 March 1984 (1984-03-29) <br> * abstract * <br> * page 5, line 7 - line 31 * | 1,9,23 | |
| A | US 4 390 817 A (JOHNSON FRED D) 28 June 1983 (1983-06-28) <br> * abstract * <br> * column 1, line 5 - line 9 * <br> * column 2, line 4 - line 61; figure 2 * | 18,19 | |

-/--

The present search report has been drawn up for all claims

| Place of search | Date of completion of the search | Examiner |
|---|---|---|
| Munich | 20 June 2007 | Corsi, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 06 29 1842

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 3 555 175 A (GRIEPENTROG DAL F) 12 January 1971 (1971-01-12) * abstract * * column 1, line 3 - line 58 * * column 2, line 14 - line 30 * * column 3, line 29 - column 5, line 11; figure 1 * ----- | 1,7-9, 20,21,23 | |
| | | | TECHNICAL FIELDS SEARCHED (IPC) |

The present search report has been drawn up for all claims

| Place of search | Date of completion of the search | Examiner |
|---|---|---|
| Munich | 20 June 2007 | Corsi, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 29 1842

This annex lists the patent family members relating to the patent documents cited in the above-mentioned European search report.
The members are as contained in the European Patent Office EDP file on
The European Patent Office is in no way liable for these particulars which are merely given for the purpose of information.

20-06-2007

| Patent document cited in search report | | Publication date | Patent family member(s) | | Publication date |
|---|---|---|---|---|---|
| US 4803464 | A | 07-02-1989 | NONE | | |
| US 5714842 | A | 03-02-1998 | NONE | | |
| US 4651064 | A | 17-03-1987 | NONE | | |
| DE 3235853 | A1 | 29-03-1984 | NONE | | |
| US 4390817 | A | 28-06-1983 | NONE | | |
| US 3555175 | A | 12-01-1971 | AT | 306124 B | 26-03-1973 |
| | | | BE | 733188 A | 03-11-1969 |
| | | | DE | 1925710 A1 | 14-05-1970 |
| | | | ES | 367457 A1 | 01-04-1971 |
| | | | FR | 2009143 A5 | 30-01-1970 |
| | | | GB | 1267408 A | 22-03-1972 |
| | | | NL | 6907767 A | 25-11-1969 |
| | | | SE | 359010 B | 13-08-1973 |

EPO FORM P0459

For more details about this annex : see Official Journal of the European Patent Office, No. 12/82